Europäisches Patentamt

European Patent Office

Office européen des brevets

(11) Publication number: **0 149 559**
**B1**

## EUROPEAN PATENT SPECIFICATION

(45) Date of publication of patent specification: **04.05.88**

(51) Int. Cl.⁴: **F 16 L 5/02, E 04 B 1/94**

(21) Application number: **85300301.0**

(22) Date of filing: **16.01.85**

(54) Devices for the fire stopping of plastics pipes.

(30) Priority: **19.01.84 AU 3267/84**

(43) Date of publication of application:
**24.07.85 Bulletin 85/30**

(45) Publication of the grant of the patent:
**04.05.88 Bulletin 88/18**

(84) Designated Contracting States:
**AT BE CH DE FR GB IT LI LU NL SE**

(56) References cited:
**EP-A-0 062 298**
**DE-A-2 809 463**
**FR-A-2 235 328**
**FR-A-2 363 673**
**FR-A-2 465 041**
**US-A-4 221 092**

(73) Proprietor: **FIRE RESEARCH PTY. LIMITED**
**59 Normanby Road**
**Notting Hill Victoria (AU)**

(72) Inventor: **Wexler, Jonathan B.**
**35 Clinton Street**
**East Brighton Victoria (AU)**

(74) Representative: **Corin, Christopher John et al**
**Mathisen Macara & Co. The Coach House 6-8**
**Swakeleys Road**
**Ickenham Uxbridge UB10 8BZ (GB)**

Courier Press, Leamington Spa, England.

## Description

The present invention relates to a device for shutting off, in the event of fire, a plastics pipe passing through a fire-resisting partition.

Plastics pipes which pass through fire-resisting walls or floors in a building represents a potential fire hazard. In the event of a fire, the plastics pipe is liable to melt thus creating a void through which hot gases may pass thereby spreading the fire to the space on the other side of the wall or floor. In order to avoid this effect, fire regulations may require that where a pipe passes through a fire-resisting wall or floor, means are provided for blocking a void which may be formed if the pipe should melt.

One previously proposed method of blocking a void which may be formed by a melting pipe involves the use of a mechanical shut-off device comprising a metal closure plate, usually actuated by gravity or a spring bias to displace the pipe as it softens and thereby cover the resulting hole in the wall or floor, the plate being attached to a bracket or other mounting assembly secured to the wall or floor adjacent the pipe. In addition to simply covering the hole, it is necessary that a shut-off device of this type should, after reaching the closed position, provide across the opening a seal of sufficient gas tightness that hot gases under pressure in the fire compartment should have a sufficiently low rate of passage through the now covered opening that temperature rise conditions outside the fire compartment do not exceed test standards, or alternatively, that no collapse due to heat softening of plastic pipework outside the fire compartment can occur.

The sealing tightness of such a device can be improved by application of a variety of chemical materials which intumesce on heating and expand to fill any cracks or gaps which may be left between the metal plate and the area around the hole. Selection of such intumescing materials must be made with care to ensure that they do not obstruct the movement of the plate and prevent a full mechanical closure from taking place. Relevant properties of such chemical intumescing materials are the temperature at which intumenscence begins to occur and the stiffness or strength of the foam generated. In practice it is found that intumescent chemicals of the carbon char forming type are suitable, but unfortunately these materials have the characteristic of burning away at the higher temperatures encountered at later stages of the fire. The best of these materials would not exceed 30 minutes of effective sealing performance under fire conditions.

A further problem associated with the use of such purely mechanical shut-off devices is that for long duration fire performance—say in excess of 2 hours—the moving shut-off plate needs to be of heavily insulated construction so as to prevent transmission of unacceptable amounts of heat through the plate itself and thence through the opening which it covers. In practice, mechanical devices required for performance to a 2 or 3 Hour Rating require to be of bulky construction and are objectionable both from a cost and from a building installation point of view. For this reason there is a preference to use a device known as a fire stop collar which comprises an intumescent packing surrounding the pipe within the floor or wall, rather than on the surface of the floor or wall. Devices of this type are disclosed, for example in US—A—4,221,092 and FR—A—2,235,328.

However, with such fire stop collars, the rate at which they can operate to close a softened plastic pipe within a wall or floor is limited by the rate at which heat transmission can reach the packing through the face exposed to the fire. In floor installations, it is found that collars of appropriate design can function adequately for PVC pipes in nominal diameter sizes from 32 mm up to 100 mm. Above 100 mm in size, the collar does not act to close the pipe quickly enough and needs to be supplemented by the use of a mechanical shut-off device of the type described above which acts to close off the pipe opening at the time when the pipe first softens.

A similar consideration applies to smaller sizes of pipe when connected to floor drains and wastes such as from showers, bathrooms, and urinals. In such configurations, when the pipe within the fire compartmsnt burns through, hot gases are free to issue from the floor grating and can ignite any combustibles which may be present in those immediate areas. This condition is quite distinct from that in which the plastics pipe runs continuously through the opening in the wall or floor, because hot gases are contained within the pipe, the walls of which remain relatively cool for sufficient time into the fire period for the fire stop collar to become activated and close the opening. Test conditions for this floor waste configuration require that temperatures measured in the actual floor grating opening cannot exceed 180° rise above ambient at any time from the onset of fire conditions. A fire stop collar used alone cannot satisfy this requirement and it is necessary to supplement it by a mechanical cut-off device with immediate action upon softening of the pipe.

Mechanical shut-off devices of the type so far described tend to be at least as expensive as the fire stop collars, and there is an appreciable extra cost in fixing such devices in their mounting position on a wall or the soffit of a building floor. Moreover, the bulk of such a device can be a significant hindrance to the operations of the plumbing contractor.

FR—A—2465041 discloses a mechanical shut-off device comprising spring-loaded shutter elements which acts to radially compress a plastics pipe when the pipe softens in the event of a fire. This shut-off device also suffers from the disadvantages discussed above and also does not act quickly to provide an effective seal against passage of hot gases.

A requirement exists for a low cost mechanical shut-off device which can be used in conjunction with fire stop collars and like devices.

According to the present invention, there is provided a device for shutting off, in the event of a fire, a plastics pipe passing through a fire-resisting partition, said device comprising means for applying a radially compressive force to the pipe whereby to radially constrict the pipe when the pipe softens under the effect of heat characterised in that a sheath of flexible refractory fabric is positioned around a portion of the pipe within or adjacent said partition, and the force-applying means is arranged to constrict the portion of the pipe within the sheath, the sheath acting to retain a foam-like carbon mass which is formed when the pipe burns and which thereby acts a sealing plug.

Preferably, the force-applying means comprises a tension coil spring under tension around the sheath.

An embodiment of the invention will now be described, by way of example only, with reference to the accompanying drawings, in which:

Figure 1 is a section of a shut-off device of a preferred embodiment, in position on a plastics pipe;

Figure 2 shows, schematically, a foam-like carbon mass formed at the end of the shut-off device by a burnt pipe;

Figure 3 is a perspective view of a spring of the device, prior to application to the device; and

Figure 4 is a section showing an arrangement wherein the shut-off device of the preferred embodiment is used without a fire stop collar.

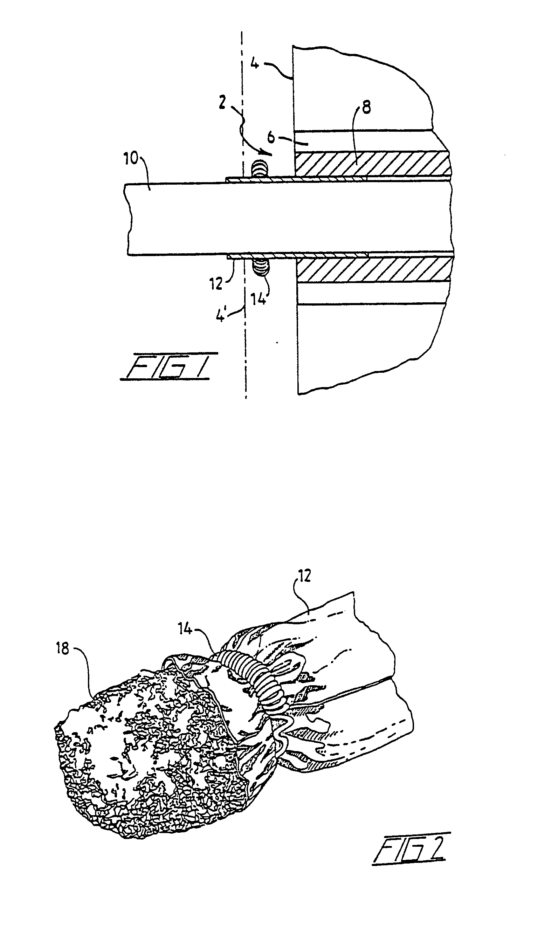

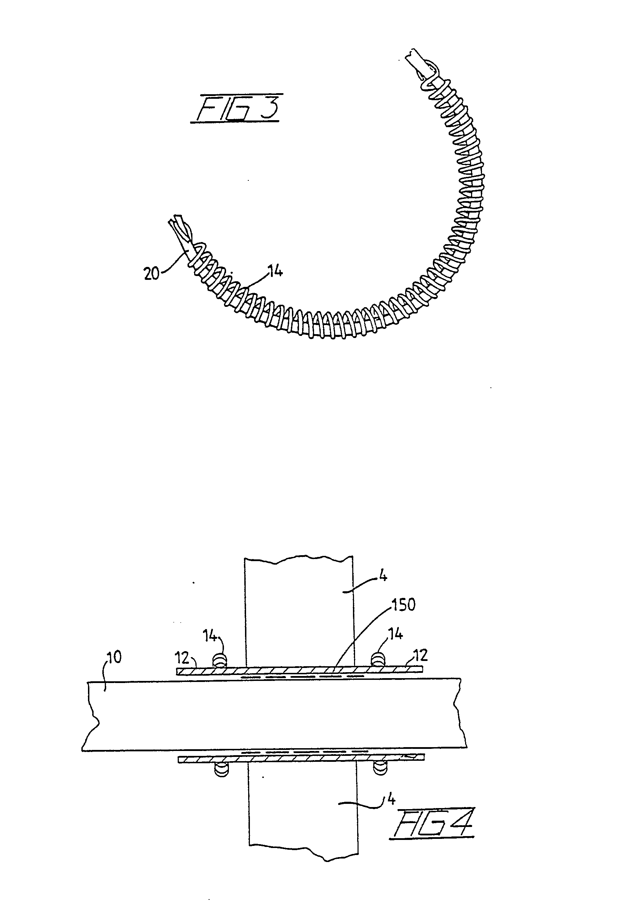

As shown in Figures 1 and 2, a shut-off device of the preferred embodiment of the invention is used in conjunction with a fire stop collar 2 embedded within a wall 4 or floor, the collar comprising a cylindrical casing 6 and an annular intumescent packing 8 which surrounds the plastics pipe 10. The shut-off device comprises a wrapping of flexible refractory fabric 12 which encircles the plastic pipe 10 over a length of approximately two pipe diameters. The fabric 12 which is preferably of less than 1 mm thickness and is composed of tightly woven silica, glass, or other refractory fibre, optionally coated for improved gas-tightness, is wrapped around the outside of the plastics pipe 10 in a single layer to form a sheath with quarter to half turn overlap, and positioned on the pipe so that the wrapping intrudes within the wall 4 or floor, and within the bore of the fire stop collar to a depth of approximately one pipe diameter, and protrudes beyond the surface of the wall 4 or floor by approximately one pipe diameter.

Over the protruding portion of the fabric 12 there is placed means which is operative to apply an inward radial force upon the wall of the pipe sufficient to bring about collapse of both the fabric sheath and the pipe wall when softening takes place in a fire. In its simplest, and preferred, form this force-applying means consists of an extended tension spring 14 placed circumferentially around the fabric 12 at a distance of approximately one pipe radius from the surface of the wall 4 or the soffit of the floor. The tension spring 14 is stretched around the pipe and its end loops interlocked to secure it in position.

In the event of a fire, the pipe softens and the portion of the pipe immediately surrounded by the spring 14 is radially contracted. The plastics material within the fabric sheath, and adjacent the outer end of the sheath, tends to burn and foam to form a foam-like carbon mass which blocks the outer end of the sheath and the constriction formed by the radially-contracted portion of the pipe. This is shown schematically in Figure 2, the foam-like mass being indicated at 18 in Figure 2. This foam-like mass, in effect, forms a plug which seals the pipe against ingress of hot gases past the constriction, at least for a time sufficient to permit proper activation of the fire stop collar.

The refractory fabric used in this device must be able to deform under external spring pressure without tearing or cracking under fire conditions at temperatures of up to 800°C. The fabric must also maintain an effective resistance to passage of hot gases for a sufficient time in the fire period,—for example, 10 to 20 minutes, depending upon the pipe diameter—to allow closure of the pipe opening to be effected by the intumescent packing in the fire stop collar.

The material from which the tension spring is formed should be such that it should be capable of maintaining requisite inward radial force on the walls of the pipe until softening and collapse is complete. This period ranges from about 5 minutes into the fire for the smaller pipe diameters, up to 10 minutes into the fire for the larger pipe diameters of 100 mm and above. Generally, ordinary low alloy spring steels would not maintain adequate spring temper sufficiently long into the fire to be reliable for service, and conventional stainless steels of the 18/8 type have been found satisfactory on smaller pipe sizes. For larger pipe diameters it may be desirable to employ high alloy, precipitation hardening spring steels capable of high temperature service to at least 600°C.

As will be apparent, when the spring is in position on the pipe, it needs to be under high tension in order to impart sufficient force to collapse the pipe when soft. It is envisaged that it could sometimes be difficult for a tradesman to stretch the spring sufficiently for application to the pipe, especially when working in a restricted space or when standing on a ladder. To facilitate application of the spring to the pipe, the spring 14 may be supplied pre-stretched on a semi-rigid former 20 as shown in Figure 3. The former consists of a rod or tube which passes as a core through the spring, with each end of the spring being hooked into a slot of the corresponding end of the core. The core is of a material which possesses sufficient compressive sterngth to maintain the tensile force in the stretched spring, but which has sufficient resilience to enable the core, with the spring, to be bent around the pipe. A semi-rigid nylon rod or tube forms a suitable core for this purpose.

In order to apply the spring to a pipe, the spring 14, while on the core 20, is bent around the pipe and the two ends of the spring are hooked together. The core 20 is then cut to enable the spring to contract under its own tension onto the pipe. The core can then be removed.

As shown in Figure 1, the spring 14 is adjacent the fire-resisting partition, such as the wall 4 or a floor. When used with relatively thick partitions, such as thick walls or floors, the spring 14 may be positioned on a part of the pipe within the wall or floor, for example as illustrated by the phantom line 4' in Figure 1.

Figure 4 shows the manner in which the shut-off device can be used other than in conjunction with a fire stop collar. In Figure 4, a metal sleeve 150 is interposed between the pipe 10 and the refractory fabric 12. The sleeve 150 may be a preformed sleeve or be formed by a flexible metal sheet wrapped around the pipe. The sleeve 150 acts to prevent collapse of the structure formed by a foam-like carbon mass and the refractory fabric when the structure is subjected to the intense heat of a fire for a relatively long period of time. As will be apparent, with the arrangement shown in Figure 4, if the structure were to collapse, a void would be formed through the wall. This effect would not occur when the shut-off device is used with a fire stop collar because, in that case, during the longer period of exposure to the fire, the fire stop collar would actuate and block the void which would otherwise exist. It is to be noted that the sleeve 150 is so positioned that the end of the sleeve lies inwardly with respect to the spring so that the presence of the sleeve does not prevent the contraction of the fabric sheath and pipe in the immediate zone of the spring.

In Figure 4, the sleeve and the refractory fabric 12 extend the entire thickness of the wall 4 and a respective spring 14 is placed at each side of the wall 4. This arrangement will provide for shut-off in the event of a fire at either side of the wall, and will provide for protection when exposed to a fire for a relatively long period of time. However, for shorter protection only one spring may be required.

## Claims

1. A device for shutting off, in the event of a fire, a plastics pipe (10) passing through a fire-resisting partition (4), said device comprising means (14) for applying a radially compressive force to the pipe (10) whereby to radially constrict the pipe (10) when the pipe (10) softens under the effect of heat characterised in that a sheath of flexible refractory fabric (12) is positioned around a portion of the pipe (10) within or adjacent said partition (4), and the force-applying means (14) is arranged to constrict the portion of the pipe (10) within the sheath, the sheath acting to retain a foam-like carbon mass (18) which is formed when the pipe (10) burns and which thereby acts as a sealing plug.

2. A device according to claim 1, wherein said force applying means (14) comprises a coil spring under tension around the sheath.

3. A device according to claim 1 or claim 2, wherein the fabric (12) consists of a tightly woven refractory fibre.

4. A device according to any one of claims 1 to 3, wherein the fabric (12) is wrapped around the pipe (10) whereby to form the sheath.

5. A device according to claim 2, further comprising a metal sleeve (150) between the pipe (10) and the sheath, the outer end of the sleeve (150) lying axially inwardly of the spring (14) with respect to the partition (4), said sleeve (150) acting to prevent collapse of part of the length of the sheath in the event of exposure to fire.

6. A device according to claim 2, wherein the spring (14) is a pre-tensioned spring supported on a semi-rigid core (20) which maintains the spring (14) under tension prior to application to the sheath, said core (20) being cut when the spring (14) is in position on the sheath whereby the tension of the spring (14) draws the spring (14) into tight engagement with the sheath and pipe (10).

7. A device according to any one of claims 1 to 6 in combination with a fire stop device incorporated in said partition (4) within said opening, said fire stop device comprising a casing (6) through which said pipe (10) passes, and intumescent packing (8) within said casing (6), said intumescent packing (8), when exposed to heat, expanding within said casing (6) to block said opening.

8. The combination of claim 7, wherein said sheath extends into said casing (6).

9. A device according to any one of claims 1 to 6 in combination with a fire stop device incorporated in said partition within said opening, said fire stop device comprising an intumescent packing (8) through which the pipe (10) passes, said packing, when exposed to heat, expanding to block said opening.

## Patentansprüche

1. Einrichtung zum Verschließen eines durch ein feuerfestes Trennelement (4) hindurchlaufenden Plastikrohrs (10) im Falle eines Brandes, die Mittel (14) zur Beaufschlagung des Rohrs (10) mit einer Kompressionskraft in radialer Richtung aufweist, um das Rohr (10) in radialer Richtung einzuschnüren, wenn dieses unter Einwirkung von Hitze erweicht, dadurch gekennzeichnet, daß eine Umhüllung (12) aus einem flexiblen, feuerfesten Material das Rohr (10) in einnem Bereich umgibt, der innerhalb des oder benachbart zum Trennelement (4) liegt, und daß die Kraftbeaufschlagungsmittel (14) so angeordnet sind, daß sie den Teil des Rohrs (10) einschnüren, der innerhalb der Umhüllung (12) liegt, wobei die Umhüllung (12) dazu dient, eine bei der Verbrennung des Rohres (10) entstehende, schaumartige Kohlenstoffmasse (18) zurückzuhalten, welche als Abdichtstopfen wirkt.

2. Einrichtung nach Anspruch 1, dadurch gekennzeichnet, daß die Kraftbeaufschlagungsmittel (14) eine unter Zugspannung stehende und die Umhüllung (12) umegebende Schraubenfeder aufweisen.

3. Einrichtung nach Anspruch 1 oder 2, dadurch gekennzeichnet, daß das Umhüllungsmaterial aus einer fest gewebten, feuerfesten Faser besteht.

4. Einrichtung nach einem der Ansprüche 1 bis 3, dadurch gekennzeichnet, daß das Umhüllungsmaterial zur Bildung der Umhüllung (12) um das Rohr (10) herumgewickelt ist.

5. Einrichtung nach Anspruch 2, gekennzeichnet durch eine zwischen dem Rohr (10) und der Umhüllung (12) liegende Metallhülse (150), deren äußeres Ende zwischen der Feder (14) und dem Trennelement (4) liegt, wobei die Hülse (150) verhindert, daß ein über die Länge gesehener Teil der Umhüllung (12) zusammenfällt, wenn diese dem Fueer ausgesetzt ist.

6. Einrichtung nach Anspruch 2, dadurch gekennzeichnet, daß die Feder (14) eine von einem halbstarren Kern (20) getragende Feder ist, der diese vor Anbringung der Umhüllung unter Spannung hält, und daß der Kern (20) zerzchnitten wird, wenn sich die Feder (14) in ihrer Position auf der Umhüllung befindet, so daß die Feder (14) aufgrund ihrer Federspannung in festem Kontakt mit der Umhüllung und dem Rohr (10) steht.

7. Einrichtung nach einem der Ansprüche 1 bis 6 in Kombination mit einer Feuerstoppvorrichtung innerhalb einer Öffnung des Trennelements (4), wobei die Feuerstoppvorrichtung ein Gehäuse (6) aufweist, durch das das Rohr (10) hindurchläuft, sowie eine ausdehnungsfähige Masse (8) innerhalb des Gehäuses (6), die sich unter Hitzeeinwirkung innerhalb des Gehäuses (6) ausdehnt, um die Öffnung zu verschließen.

8. Kombination nach Anspruch 7, dadurch gekennzeichnet, daß sich die Umhüllung in das Gehäuse (6) hinein erstreckt.

9. Einrichtung nach einem der Ansprüche 1 bis 6 in Kombination mit einer Feuerstoppvorrichtung innerhalb einer Öffnung des Trennelements, wobei die Feuerstoppvorrichtung eine ausdehnungsfähige Masse (8) aufweist, durch welche das Rohr (10) hindurchläuft, die sich unter Hitzeeinwirkung ausdehnt, um die Öffnung zu verschließen.

**Revendications**

1. Dispositif pour obturer, en case d'incendie, un tuyau (10) en matière plastique traversant une cloison coupe-feu (4), ledit dispositif comportant un moyen (14) pour appliquer sur le tuyau (10) un effort de compression radial afin grâce à cela de resserrer radialement le tuyau (10) lorsque le tuyau (10) se ramollit sous l'effet de la chaleur, caractérisé en ce qu'une gaîne en tissu réfractaire souple (12) est disposée autour d'une portion du tuyau (10) située dans la cloison (4) ou contiguë à celle-ci, et le moyen (14) d'application d'effort est conçu pour resserrer la portion du tuyau (10) à l'intérieur de la gaîne, la gaîne servant à retenir une masse mousseuse (18) de carbone formée quand le tuyau (10) brûle et qui agit de ce fait comme un bouchon d'étanchéité.

2. Dispositif selon la revendication 1, dans lequel ledit moyen (14) s'application d'effort comprend un ressort hélicoïdal tendu autour de la gaîne.

3. Dispositif selon la revendication 1 ou la revendication 2, dans lequel le tissue (12) est constitué d'un tissage serré de fibres réfractaires.

4. Dispositif selon l'une quelconque des revendications 1 à 3, dans lequel le tissue (12) est enveloppé autour du tuyau (10) afin grâce à cela de former la gaîne.

5. Dispositif selon la revendication 2, comportant en outre un manchon métallique (150) entre le tuyau (10) et la gaîne, l'extrémité extérieure du manchon (150) étant située axialement vers l'intérieur du ressort (14) par rapport à la cloison (4), ledit manchon (150) servant à empêcher l'écrasement d'une partie de la longueur de la gaîne en cas d'exposition au feu.

6. Dispositif selon la revendication 2, dans lequel le ressort (14) est un ressort pré-tendu supporté par une pièce centrale semi-rigide (20) qui maintient le ressort tendu avant son installation sur la gaîne, ladite pièce centrale (20) étant coupée une fois que le ressort (14) est en place sur la gaîne, grâce à quoi la tension du ressort (14) attire le ressort (14) pour qu'il appuie fortement contre la gaîne et le tuyau (10).

7. Dispositif selon l'une quelconque des revendications 1 à 6 combiné à un dispositif coupe-feu intégré à la cloison (4) dans ledit orifice, le dispositif coupefeu comportant une enveloppe (6) par laquelle passe le tuyau (10), et une garniture intumescente (8) dans l'enveloppe (6), ladite garniture intumescente (8), lorsqu'elle est exposée à la chaleur, gonflant dans l'enveloppe (6) pour obturer ledit orifice.

8. Combinaison selon la revendication 7, dans laquelle la gaîne s'étend jusque dans l'enveloppe (6).

9. Dispositif selon l'une quelconque des revendications 1 à 6, combiné avec un dispositif coupe-feu intégré à la cloison dans ledit orifice, le dispositif coupe-feu comprenant une garniture intumescente (8) dans laquelle passe le tuyau (10), ladite garniture, lorsqu'elle est exposée à la chaleur, gonflant pour obturer l'orifice.

0 149 559

FIG 1

FIG 2

*FIG 3*

20

14

4

150

14    14

10    12    12

*FIG 4*

4